# DEMANDE DE BREVET EUROPEEN

(11) **EP 0 765 786 A1**
(43) Date de publication de la demande: **02.04.1997**
(21) Numéro de dépôt: 96115430.9
(22) Date de dépôt: 26.09.1996
(51) Int. Cl.: B60S 1/52, B60S 1/38

(54) **Essuie-glace de véhicule automobile comportant un déflecteur souple muni d'un dispositif de projection de liquide de lavage**

(30) Priorité: 29.09.1995 FR 9511509
(71) Demandeur: VALEO SYSTEMES D'ESSUYAGE, 78321 La Verrière (FR)
(72) Inventeur: Maubray, Daniel, 92130 Issy Les Moulineaux (FR); Soucheyre, Corinne, 63500 Saint Babel (FR)
(74) Mandataire: Gamonal, Didier

(57) **Abrégé**

L 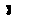 invention propose un essuie-glace de véhicule automobile, du type dans lequel un balai d'essuie-glace comporte un déflecteur aérodynamique souple (40), et du type dans lequel il est prévu un dispositif (44) de projection de produit de lavage, caractérisé en ce que le dispositif (44) de projection de liquide de lavage est porté par le déflecteur souple (40) et en ce qu 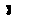 il est alimenté en liquide sous pression par une conduite fixée sur le bras d 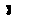 essuie-glace.

## Description

L'invention concerne un essuie-glace de véhicule automobile comportant un déflecteur souple muni d'un dispositif de projection de liquide de lavage.

L'invention concerne plus particulièrement un essuie-glace de véhicule automobile, du type dans lequel un balai d'essuie-glace est articulé à l 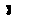 extrémité d 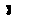 un bras d 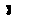 essuie-glace et est muni d 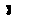 une structure articulée qui est déformable dans un plan longitudinal perpendiculaire à une vitre à essuyer, qui porte, au moyen d'une série de griffes agencées à chacune de ses extrémités terminales, une raclette d'essuyage en matériau souple, et qui plaque la raclette contre la vitre de sorte que la raclette en épouse le galbe, du type dans lequel le balai comporte un déflecteur aérodynamique souple monté sur le balai, et du type dans lequel il est prévu un dispositif de projection de produit de lavage.

Il est connu d'utiliser un déflecteur aérodynamique souple pour fournir à un essuie-glace une force d'appui complémentaire contre la vitre, notamment aux hautes vitesses du véhicule.

Le déflecteur souple est susceptible de s'adapter à la courbure du pare-brise, suivant en cela la raclette, et il présente ainsi l'avantage par rapport à un déflecteur rigide de pouvoir être positionné très près de la vitre, en amont de la raclette par rapport au sens d'écoulement des filets d'air autour du balai, de manière à pouvoir protéger la raclette de ces filets d'air et ainsi de permettre un fonctionnement optimal de l'essuie-glace.

Il est également connu de prévoir un dispositif de projection de liquide de lavage monté sur l'essuie-glace, ce qui permet d'obtenir un arrosage plus uniforme de la vitre que dans le cas où le dispositif de projection est agencé sur un élément fixe de la carrosserie du véhicule, par exemple à la base de la vitre à essuyer ou sur le capot moteur du véhicule.

Généralement, le dispositif de projection de produit de lavage est agencé du côté opposé du balai par rapport au déflecteur et nécessite de ce fait des moyens de fixation spécifiques sur la structure articulée.

De ce fait, l'assemblage d'un tel essuie-glace se révèle complexe et la disposition de ces éléments est peu favorable à une bonne intégration esthétique de l'essuie-glace sur le véhicule automobile.

Dans le but d'apporter une solution à ces problèmes, l'invention propose un essuie-glace du type vu précédemment, caractérisé en ce que le dispositif de projection de liquide de lavage est porté par le déflecteur souple.

Selon d'autres caractéristiques de l'invention :
- le dispositif de projection de liquide de lavage comporte au moins un orifice qui est tourné en direction de la vitre et qui est destiné à projeter le liquide contre la vitre, entre le déflecteur et le balai ;
- le dispositif de projection est accroché sur des organes de fixation du déflecteur sur la structure articulée ;
- le dispositif de projection est réalisé venu de matière avec le déflecteur :
- le dispositif de projection est réalisé venu de matière avec les organes de fixation qui comportent des traverses de liaison sur lesquelles le déflecteur est surmoulé ;
- le dispositif de projection de liquide de lavage est réalisé sous la forme d 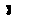 une pièce indépendante fixée sur le déflecteur par emboîtement élastique ; et
- le dispositif de projection de liquide de lavage est un gicleur qui est agencé sensiblement au centre du balai ;
- le dispositif de projection est une rampe qui s 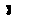 étend le long du déflecteur et qui comporte une série d 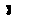 orifices de projection répartis sur la longueur de la rampe.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un essuie-glace muni d'un déflecteur souple comportant un dispositif de projection de produit de lavage conforme aux enseignements de l'invention ;
- la figure 2 est une vue partielle en perspective plus détaillée d 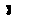 un premier mode de réalisation de l 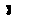 invention ; et
- les figures 3 et 4 sont des vues schématiques en coupe transversale de deux variantes de réalisation d 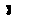 un essuie-glace selon l 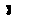 invention.

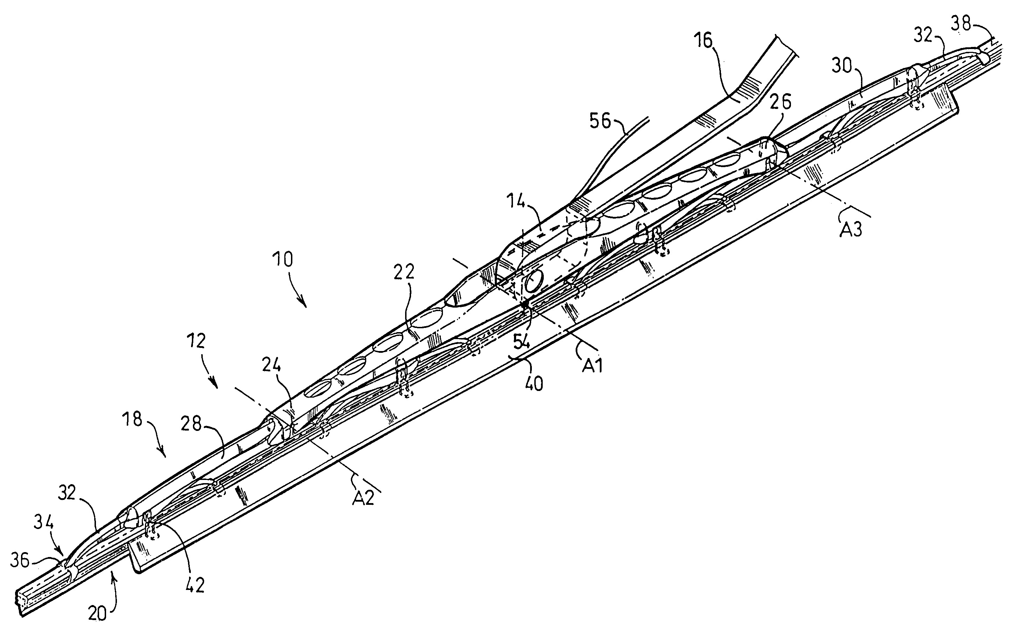

On a représenté sur la figure 1 un essuie-glace 10 de véhicule automobile comportant un balai d'essuie-glace 12 qui est monté articulé, autour d'un axe transversal A1, à l'extrémité longitudinale avant 14 d'un bras 16 qui entraîne l 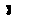 essuie-glace 10 en balayage alterné.

De manière connue, le balai d'essuie-glace 12 comporte une structure articulée 18 qui s'étend dans un plan longitudinal sensiblement perpendiculaire au plan général d 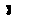 une vitre à essuyer (non représentée) et qui porte une raclette d'essuyage 20 qu'elle est destinée à plaquer contre la vitre.

A cet effet, la structure articulée 18 comporte un étrier principal 22 qui est monté articulé sur l'extrémité avant 14 du bras 16 et à chacune des extrémités longitudinales 24, 26 duquel sont articulés, autour d'axes transversaux respectifs A2, A3, des étriers secondaires 28, 30 qui portent à leur tour, à chacune de leurs extrémités longitudinales, des palonniers articulés 32.

Les palonniers articulés 32 comportent à chacune de leurs deux extrémités longitudinales 34 des griffes 36 d'accrochage de la raclette 20 qui coopèrent avec un talon supérieur 38 de la raclette 20.

Le balai d'essuie-glace 12 ainsi représenté est un balai de grande longueur qui comporte de ce fait un étrier principal 22, deux étriers secondaires 28, 30 et quatre palonniers 32, et comporte ainsi huit griffes d'accrochage 36 de la raclette 20. Il va de soi que, pour un balai d'essuie-glace 12 de longueur réduite, il est possible de diminuer le nombre de griffes d'accrochage 36 en supprimant, par exemple, un palonnier 32 ou même l'un des étriers secondaires 28, 30.

Le balai d'essuie-glace 12 selon l'invention est muni d'un déflecteur aérodynamique souple 40 qui s'étend longitudinalement sur un côté de la raclette 20 et qui comporte des pattes de fixation 42 sur la structure articulée 18 du balai 12.

Conformément aux enseignements de l'invention, le balai d'essuie-glace 12 comporte une rampe d'arrosage 44 qui est portée par le déflecteur 40 et qui s 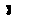 étend sensiblement sur toute la longueur du déflecteur 40.

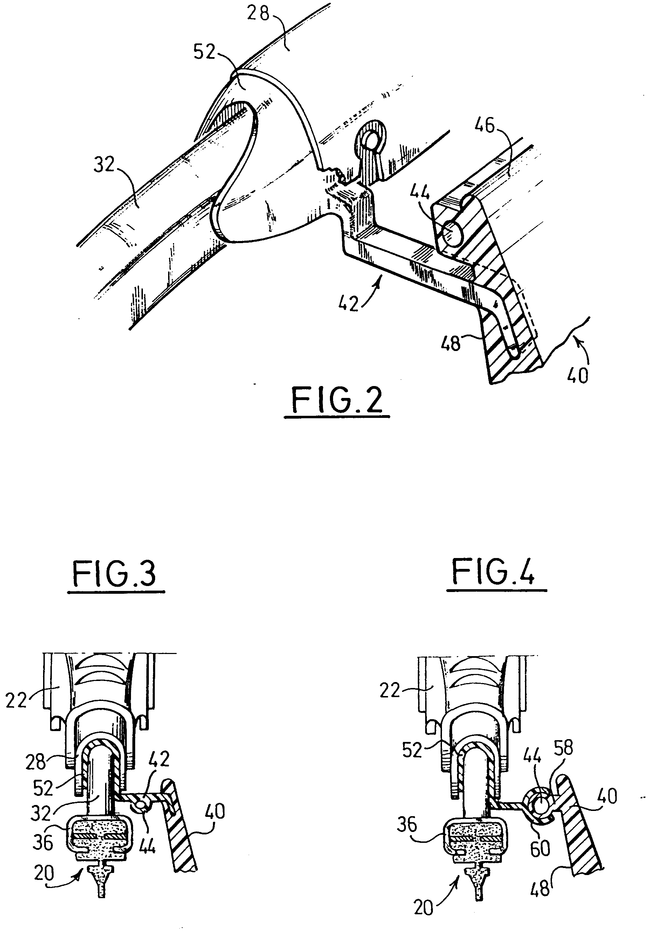

Dans le mode de réalisation représenté sur la figure 2, la rampe d'arrosage 44 est réalisée venue de matière avec le déflecteur souple 40 sur lequel elle est agencée au niveau d'un bord supérieur 46.

La rampe d'arrosage 44 se présente sous la forme d'un tube creux qui est décalé transversalement en direction du balai 12 par rapport à une face arrière 48 du déflecteur 40, tournée en direction du balai 12, de manière à être en regard de la vitre, entre le déflecteur 40 et le balai 12.

La rampe 44 comporte une entrée d 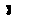 alimentation 54, agencée sensiblement au niveau de l 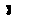 articulation du balai 12 sur le bras 16, et sur laquelle est raccordée une conduite souple 56 reliée à un système de distribution de liquide de lavage (non représenté).

La rampe 44 comporte aussi une série d'orifices (non représentés) qui sont dirigés en direction de la vitre à essuyer et qui permettent de projeter le liquide de lavage entre la face arrière 48 du déflecteur 40 et la raclette 20.

De la sorte, la projection du liquide se fait très près de la raclette d'essuyage 20, à l'abri des filets d'air qui s 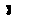 écoulent le long de la vitre du fait du déplacement du véhicule.

Les pattes de fixation 42 du déflecteur 40 et de la rampe 44 sont destinées à être fixées sur un cavalier antibruit 52 agencé entre les étriers secondaires 28, 30 et les palonniers 32, au niveau de leur articulation.

De la sorte, le déflecteur 40 et la rampe 44 se déforment simultanément avec la structure articulée 18 lorsque la raclette 20 suit le galbe de la vitre.

De préférence, les pattes de fixation 42 sont réalisées, venues de matière avec un cavalier 52, sous la forme de pièces indépendantes sur lesquelles le déflecteur 40 et la rampe 44 sont accrochés, par exemple, par surmoulage

On a représenté sur la figure 3 un deuxième mode de réalisation de l 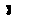 invention dans lequel la rampe 44 est réalisée venue de matière avec les pattes de fixation 42 du déflecteur 40.

Le déflecteur 40 est alors surmoulé sur des traverses de liaison qui prolongent les pattes de fixation 42 et qui s 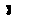 étendent transversalement depuis la rampe 44 vers le déflecteur 40.

Dans l 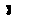 exemple de réalisation représenté sur la figure 4, la rampe d 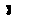 arrosage 44 est réalisée, comme dans le premier mode de réalisation, venue de matière avec le déflecteur 40, sous la forme d 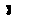 un tube creux qui s 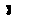 étend le long de la face arrière 48 du déflecteur.

Toutefois, la rampe 44 est alors reliée à la face arrière 48 par une traverse de liaison amincie 58.

Les pattes de fixation 42, qui sont réalisées venues de matière avec un cavalier antibruit 52, portent chacune une bague cylindrique longitudinale 60 pour recevoir la rampe 44, la bague 60 étant fendue sur toute sa longueur pour permettre le passage de la traverse de liaison 58.

La rampe 44 est destinée à être emboîtée transversalement en force dans la bague fendue 58.

On peut également prévoir d 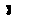 enfiler la rampe 44 longitudinalement au travers de chacune des bagues 60 pour assurer un montage coulissant du déflecteur 40 dans les bagues 60, des moyens complémentaires (non représentés) étant par ailleurs prévus pour immobiliser globalement le déflecteur 40 par rapport au balai 12 selon la direction longitudinale.

Une telle fixation du déflecteur 40 diminue les efforts nécessaires à la déformation du déflecteur 40.

La forme en section transversale de la rampe 44 et de la bague 60 peut alors être prismatique pour prévenir tout risque de pivotement du déflecteur 40 autour de la rampe 44.

Ces exemples de réalisation d'un mode de fixation ne sont toutefois pas limitatifs et on peut réaliser un déflecteur souple 40 qui soit fixé, par exemple, sur la raclette 20 ou sur les palonniers 32, et comportant un dispositif d'arrosage, sans sortir du cadre de l'invention.

On peut également envisager de réaliser la rampe 44 sous la forme d'une pièce indépendante fixée sur des pattes d'accrochage 42 réalisées venues de matière avec le déflecteur 40.

On peut alors prévoir une forme particulière des pattes de fixation 42 telle que l 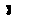 on puisse y accrocher une rampe par simple emboîtement élastique.

Dans le cas (non représenté) où le balai d'essuie-glace est de longueur réduite, on peut aussi choisir de réaliser le dispositif de projection de produit de lavage sous la forme d'un gicleur central réalisé venu de matière avec le déflecteur 40 ou avec une patte d'accrochage 42.

Le gicleur peut être alors muni de plusieurs orifices de projection orientés légèrement différemment en direction de la vitre, dans un plan parallèle au plan de déformation de la structure articulée 18 du balai 12, afin de projeter le liquide de lavage sur la surface la plus grande possible.

## Revendications

1. Essuie-glace de véhicule automobile, du type dans lequel un balai d'essuie-glace (12) est articulé à l 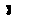 extrémité (14) d 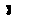 un bras d 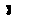 essuie-glace (16) et est muni d 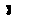 une structure articulée (18) qui est déformable dans un plan longitudinal perpendiculaire à une vitre à essuyer, qui porte, au moyen d'une série de griffes (36) agencées à chacune de ses extrémités terminales (34), une raclette d'essuyage (20) en matériau souple, et qui plaque la raclette (20) contre la vitre de sorte que la raclette (20) en épouse le galbe, du type dans lequel le balai (12) comporte un déflecteur aérodynamique souple (40), et du type dans lequel il est prévu un dispositif (44) de projection de produit de lavage, caractérisé en ce que le dispositif (44) de projection de liquide de lavage est porté par le déflecteur souple (40).

2. Essuie-glace selon la revendication 1, caractérisé en ce que le dispositif (44) de projection de liquide de lavage comporte au moins un orifice qui est tourné en direction de la vitre et qui est destiné à projeter le liquide contre la vitre, entre le déflecteur (40) et le balai (12).

3. Essuie-glace selon la revendication 1 ou 2, caractérisé en ce que le dispositif (44) de projection est accroché sur des organes de fixation (42) du déflecteur (40) sur la structure articulée (18).

4. Essuie-glace selon l 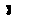 une quelconque des revendications précédentes, caractérisé en ce que le dispositif (44) de projection est réalisé venu de matière avec le déflecteur (40).

5. Essuie-glace selon l 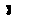 une quelconque des revendications 1 à 3, caractérisé en ce que le dispositif (44) de projection est réalisé venu de matière avec les organes de fixation (42) qui comportent des traverses de liaison sur lesquelles le déflecteur (40) est surmoulé.

6. Essuie-glace selon l 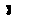 une quelconque des revendications 1 à 2, caractérisé en ce que le dispositif (44) de projection de liquide de lavage est réalisé sous la forme d 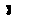 une pièce indépendante fixée sur le déflecteur (40) par emboîtement élastique.

7. Essuie-glace selon l 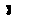 une quelconque des revendications précédentes, caractérisé en ce que le dispositif (44) de projection de liquide de lavage est un gicleur qui est agencé sensiblement au centre du balai (12).

8. Essuie-glace selon l 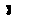 une quelconque des revendications 1 à 6, caractérisé en ce que le dispositif de projection est une rampe (44) qui s 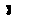 étend le long du déflecteur (40) et qui comporte une série d 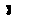 orifices de projection répartis sur la longueur de la rampe (44).
